# EUROPÄISCHE PATENTSCHRIFT

(11) **EP 0 446 474 B1**
(45) Veröffentlichungstag und Bekanntmachung des Hinweises auf die Patenterteilung: **19.01.1994**
(21) Anmeldenummer: 90125028.2
(22) Anmeldetag: 20.12.1990
(51) Int. Cl.: G01G 7/02, G01G 21/08

(54) **Elektronische Waage**
Electronic balance
Balance électronique

(30) Priorität: 14.03.1990 CH 823/90
(43) Veröffentlichungstag der Anmeldung: 18.09.1991
(73) Patentinhaber: Mettler-Toledo AG, 8606 Greifensee (CH)
(72) Erfinder: Lüchinger, Paul, CH-8610 Uster (CH); Strickler, Ernst, CH-8633 Wolfhausen (CH)

(56) Entgegenhaltungen:
- EP-A- 0 136 118
- DE-U- 8 504 114
- DE-U- 8 716 117
- DE-U- 8 913 242
- PATENT ABSTRACTS OF JAPAN, vol. 8, no. 18 (P-250)(1455) 26. Januar 1984 & JP-A-58 176 525

## Beschreibung

Gegenstand der vorliegenden Erfindung ist eine elektronische Waage mit einem parallel geführten Lastaufnehmer, einem mit dem Lastaufnehmer über ein Biegelager verbundenen und an einem am Wagengestell befestigten Joch schwenkbar aufgehängten Übersetzungshebel.

Bei hochauflösenden Waagen mit einem Systemgewicht, welches das 50- bis 100-millionenfache der Auflösung der Waage beträgt, treten beim Neigen der Unterlage, z.B. des Tisches, Nullpunktsabweichungen auf. Mittels einer Mutter, welche auf einer vertikal verlaufenden Spindel am Wägebalken drehbar angeordnet ist, kann die Schwerpunktlage bezüglich der Längsachse justiert werden, wodurch das System bezüglich Neigungen der Waage in der Längsachse im wesentlichen indifferent gemacht wird.

Eine Neigung des Wägebalkens in Querrichtung ist meist auf Montage- und Herstellungsgenauigkeit der Biegeelemente zurückzuführen. Diese können durch die vertikal verschiebbare Mutter nicht behoben werden.

Die Aufgabe der vorliegenden Erfindung besteht darin, zusätzlich zur Justierung der Nullpunktsniveau-Abhängigkeit von Neigungen in Längsachse die Nullpunktsniveau-Abhängigkeit von der Neigung in der Querachse zu verringern bzw. die Waage generell bezüglich Neigungen des Systems in beiden Achsen unempfindlicher zu machen.

Erfindungsgemäss wird die Aufgabe dadurch gelöst, dass das Joch mit seinen beiden Enden auf zwei Auflagern am Waagengestell abgestützt und die vertikale Lage mindestens eines der beiden Enden bezüglich der Auflager einstellbar ist.

Mit der erfindungsgemässen Vorrichtung kann die Lage des Joches in vertikaler Richtung verstellt werden. Der am Joch hängende oder stehende Wägebalken lässt sich damit in eine niveauneutrale Lage bringen, welche eine Übertragung der Kräfte vom Lastaufnehmer zur Spule ohne das Wägeresultat beeinflussende Querkräfte ermöglicht. Die am Joch gegenüber der Justierschraube angebrachte Biegestelle verhindert, dass auf die beiden in einem Abstand am Joch befestigten Biegeelemente eine Verspannung infolge Durchbiegung des Joches übertragen wird.

Anhand illustrierter Ausführungsbeispiele wird die Erfindung näher erläutert. Es zeigen:
- Figur 1: eine schematische Darstellung einer Waage,
- Figur 2: einen Ausschnitt aus der Waage im Bereich der Aufhängung des Wägebalkens in perspektivischer Darstellung,
- Figur 3: eine Darstellung einer weiteren Ausführungsform der Aufhängung des Wägebalkens in perspektivischer Darstellung und
- Figur 4: eine Darstellung einer weiteren Ausführungsform der Aufhängung des Wägebalkens in perspektivischer Darstellung.

Das strichpunktiert angedeutete Waagengehäuse 1 umschliesst den Wägeraum 3, das die Bedienungselemente aufnehmende Tastaturfeld 5 und einen Raum 7 zur Aufnahme des Grossteils der Wägemechanik und Elektronik einer elektronischen Waage 2.

Im Waagengestell (pauschal mit 9 bezeichnet) ist über Lenker 11 und Biegelager 13 ein Lastaufnehmer 15 parallel geführt. Ein Übersetzungshebel (Waagbalken) 17 ist über ein Biegelager 19 an einer Konsole 21 schwenkbar aufgehängt. An seinem Ende ist er über ein Biegelager 23 an den Lastaufnehmer 15 gekoppelt. Nahe an seinem anderen Ende verfügt er über eine Tauchspule 25, welche in einen Spulentopf 26 eines ortsfesten Permanentmagnetsystems bekannter Art eintaucht. Eine Fahne 27 symbolisiert eine konventionelle Positionsabtastung. Die Waagschale 28 ist auf einem sich horizontal vom Lastaufnehmer 15 erstreckenden Ausleger 29 aufgesetzt. Selbstverständlich kann die Waagschale 28 auch oberhalb des Lastaufnehmers 15 angeordnet sein.

Die am Waagengestell 9 befestigte Konsole 21 besteht aus zwei turmartigen Auflagern 31 mit horizontal liegenden Auflageflächen 39 und einem über den Auflagern 31 angeordneten Joch 33 mit Enden 34 und 36. Das die Auflager 31 brückenartig verbindende Joch 33 ist mittels Schrauben 35 und 37 auf Auflageflächen 39 und 41 am oberen Ende der Auflager 31 befestigt. Die Schraube 37 ist als Spannschraube ausgebildet, und es sind zwischen deren Kopf und dem Joch 33 zu einem Federpaket 43 zusammengefügte Federscheiben eingesetzt. Neben der Schraube 37 ist eine Stellschraube 45 in einem Gewinde im Joch 33 längsgeführt, deren Ende und auf der Stirnfläche 41 des Auflagers 31 anliegt.

In einer weiteren Ausgestaltung kann die Stellschraube 45 Differentialgewinde aufweisen, welche in entsprechenden Gewindebohrungen im Joch 33 und im Auflager 31 geführt sind.
Am Waagbalken 17 ist auf einer daran befestigten, vertikal verlaufenden Spindel 47 ein als Mutter ausgeführtes, durch Drehen vertikal verschiebbares Gewicht 49 angeordnet.

Benachbart zur Auflagefläche 39 ist am Ende 34 des Jochs 33 ein Biegelager 51 in Gestalt einer Querschnittsverengung angebracht. Selbstverständlich kann das Biegelager 51 auch als Scharnier oder als ein die Auflager 31 mit dem zentralen Teil des Jochs 33 verbindendes Biegelagerelement ausgebildet sein, wie es zur Aufhängung des Wägebalkens 17 am Joch 33 gezeigt wird. Der zentrale Bereich des Joches 33, an dem die beiden Biegelager 19 befestigt sind, ist in sich steif ausgebildet, um eine Verspannung der Biegelager 19 zu verhindern.

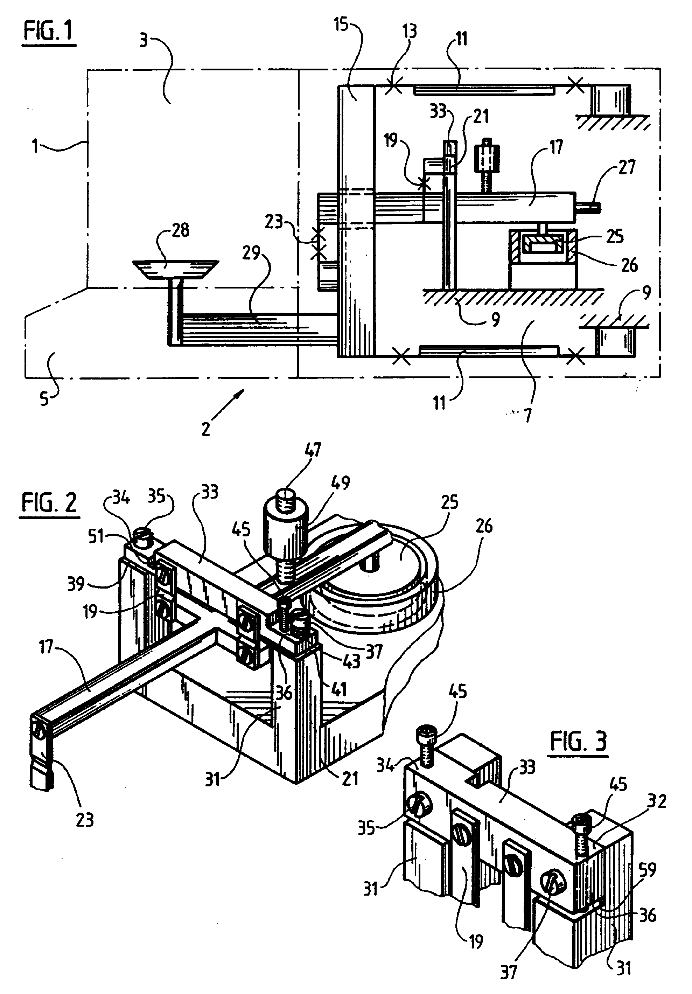

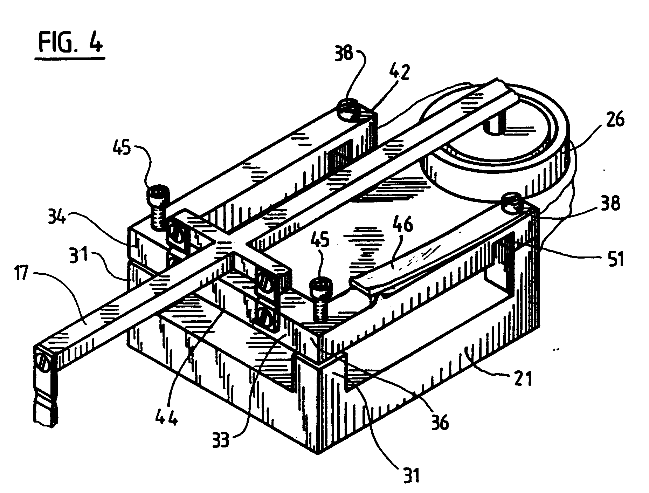

In der Ausgestaltung der Erfindung nach Figur 3 ist das Joch 33 durch die beiden Schrauben 35 und 37 an einer vertikal liegenden Fläche 32 an den Auflagern 31 befestigt. Eine Bohrung 53 im Joch 33, durch welche hindurch die Schraube 37 zum Auflager 31 geführt wird, weist einen Durchmesser auf, welcher grösser ist als der Durchmesser des Gewindeabschnittes der Schraube 37 und es erlaubt, das Joch 33 in vertikaler Richtung zu schwenken. Als Schwenkachse dient die Schraube 35, welche mit wenig oder ohne Spiel durch eine Bohrung im Ende 34 im Joch 33 geführt ist. Analog zur Ausführung gemäss Figur 2 ist neben der Spannschraube 37 eine vertikal stehende Stellschraube 45 angebracht, mittels welcher die Lage des Jochs 33 zur Vertikalen justierbar ist.
In einer weiteren Ausgestaltung der Erfindung nach Figur 4 ist das Joch 33 u-förmig ausgebildet, wobei die Befestigung des Jochs 33 hinter den Auflagern 31 am Waagengestell 9 mittels Schrauben 38 an den Schenkelenden 42 erfolgt. Zur Justierung ist, wie in der Figur 3, über den Auflagern 31 auf jeder Seite der Basis 44 des Jochs 33 je eine Justierschraube 45 angebracht.
Das Joch 33 kann wie in den Figuren 2 und 3 mit einer Spannschraube oder auch einer Blattfeder 46 an den Auflagern 31 gehalten werden (in Figur 4 einseitig dargestellt).

Zur Justierung des Waagbalkens 17 in der Querachse wird die Justierschraube 45 so weit eingedreht, bis die theoretische horizontale Lage erreicht ist. Anschliessend wird die Spannschraube 37 so weit angezogen, bis eine bestimmte Vorspannkraft auf die Justierschraube 45 wirkt. Die Justierschraube bleibt dann mit einer definierten Kraft angepresst.
Die Justierung der Waage wird wie folgt vorgenommen: Die Waage wird auf eine auf zwei Achsen um je zwei Promille kippbare Unterlage gestellt. Vorerst wird die Anzeigeabweichung des Nullpunktes in Längsachse festgestellt und mittels Verschiebung der Mutter 49 in die Toleranz hinein justiert. Anschliessend wird die Anzeigeabweichung des Nullpunktes beim Kippen in Querachse festgestellt. Je nach Abweichung wird nun das Joch 33 mittels der Justierschraube 45 höher oder tiefer gestellt, bis auch in dieser Achse die Anzeige innerhalb des Toleranzwertes liegt. Anschliessend kann nochmals die Abweichung in Längsachse überprüft und eventuell der Schwerpunkt des Wägebalkens 17 mittels der Schraube 49 nachjustiert werden.

Anstelle der hier bevorzugten Stellschraube 45 können verschiedene andere Justiermittel zur Anwendung kommen (beispielsweise verschiebbare Keile zwischen den Jochenden und den Auflagern 31).

## Patentansprüche

1. Elektronische Waage mit einem parallel geführten Lastaufnehmer (15), einem mit dem Lastaufnehmer (15) über mindestens ein Biegelager (23) verbundenen und an einem am Waagengestell (9) befestigten Joch (33) schwenkbar aufgehängten Übersetzungshebel (17), dadurch gekennzeichnet, dass das Joch (33) mit seinen beiden Enden (34,36) auf zwei Auflagern (31) am Waagengestell (9) abgestützt und die vertikale Lage mindestens eines der beiden Enden (34,36) bezüglich der Auflager (31) einstellbar ist.

2. Waage nach Anspruch 1, dadurch gekennzeichnet, dass zur Einstellung der vertikalen Lage eine Stellschraube (45) vorgesehen ist.

3. Waage nach Anspruch 1 oder 2, dadurch gekennzeichnet, dass das Ende (34) fest mit dem Auflager (31) verschraubt und am Joch (33) unmittelbar neben der Verschraubung eine Biegestelle (51) ausgebildet ist.

4. Waage nach einem der Ansprüche 1 bis 3, dadurch gekennzeichnet, dass mindestens an einem Ende (36) des Jochs (33) eine Spannschraube (37) angeordnet ist.

5. Waage nach einem der Ansprüche 1 bis 3, dadurch gekennzeichnet, dass mindestens eines der Enden (34 oder 36) des Jochs (33) durch eine Blattfeder (46) an das Auflager (31) anpressbar ist.

6. Waage nach einem der Ansprüche 2 bis 5, dadurch gekennzeichnet, dass das Joch (33) an einem Ende (34) mit einer Schraube (35) an einer vertikalen Fläche am Auflager (31) befestigt und am anderen Ende (36) mit der Stellschraube (45) um die die Drehachse für das Joch (33) bildende Schraube (35) schwenkbar ist.

7. Waage nach Anspruch 1, dadurch gekennzeichnet, dass das Joch (33) U-förmig ausgebildet und an den Enden der Schenkel mit dem Waagengestell (9) mit je einer Schraube (38) fest verschraubt ist und dass die Lage der Basis des U-förmigen Jochs (33) an den Auflagern (31) einstellbar ist.

8. Waage nach Anspruch 7, dadurch gekennzeichnet, dass benachbart zu den Schrauben (38) je eine Biegestelle (51) angebracht ist.

## Claims

1. An electronic balance comprising a load-receiving means (15) which is guided in parallel relationship, and a transmission lever (17) which is connected to the load-receiving means (15) by way of at least one bending mounting (23) and which is pivotably suspended on a yoke (33) secured to the balance frame (9), characterised in that the yoke (33) is supported by its two ends (34, 36) on two supports (31) on the balance frame (9) and the vertical position of at least one of the two ends (34, 36) is adjustable relative to the supports (31).

2. A balance according to claim 1 characterised in that an adjusting screw (45) is provided for adjustment of the vertical position.

3. A balance according to claim 1 or claim 2 characterised in that the end (34) is screwed fast to the support (31) and a bending location (51) is provided on the yoke (33) immediately beside the screw connection.

4. A balance according to one of claims 1 to 3 characterised in that a clamping screw (37) is arranged at least at one end (36) of the yoke (33).

5. A balance according to one of claims 1 to 3 characterised in that at least one of the ends (34 or 36) of the yoke (33) can be pressed against the support (31) by a leaf spring (46).

6. A balance according to one of claims 2 to 5 characterised in that the yoke (33) is secured at one end (34) to a vertical surface on the support (31) by a screw (35) and at the other end (36) is pivotable with the adjusting screw (45) about the screw (35) which forms the axis of rotation for the yoke (33).

7. A balance according to claim 1 characterised in that the yoke (33) is of a U-shaped configuration and at the ends of the respective limbs is screwed fast to the balance frame (9) by a respective screw (38) and that the position of the base of the U-shaped yoke (33) is adjustable on the supports (31).

8. A balance according to claim 7 characterised in that a respective bending location (51) is provided adjacent each of the screws (38).

## Revendications

1. Balance électronique comprenant un support de charge (15) guidé en parallélisme, ainsi qu'un levier de transmission (17) qui est relié au récepteur de charge (15) par au moins un support fléchissant (23) et qui est suspendu oscillant à une traverse (33) fixée sur le châssis (9) de la balance, caractérisée en ce que les deux extrémités (34, 36) de la traverse (33) prennent appui sur deux supports (31) du châssis (9) de la balance et la position verticale d'au moins l'une des deux extrémités (34, 36) par rapport aux supports (31) est réglable.

2. Balance selon la revendication 1, caractérisée en ce qu'une vis de réglage (45) est prévue pour le réglage de la position verticale.

3. Balance selon la revendication 1 ou 2, caractérisée en ce que l'extrémité (34) est fixée par vissage sur le support (31) et un lieu de flexion (51) est réalisé sur la traverse (33) immédiatement à côté de la fixation par vissage.

4. Balance selon l'une des revendications 1 à 3, caractérisée en ce qu'une vis de serrage (37) est disposée au moins à une extrémité (36) de la traverse (33).

5. Balance selon l'une des revendications 1 à 3, caractérisée en ce qu'au moins l'une des extrémités (34 ou 36) de la traverse (33) est pressée contre le support (31) par une lame de ressort (46).

6. Balance selon l'une des revendications 2 à 5, caractérisée en ce que la traverse (33) est fixée à une extrémité (34) par une vis (35) sur une surface verticale du support (31) et la vis de réglage (45) placée à l'autre extrémité (36) peut la faire pivoter autour de la vis (35) qui forme l'axe de rotation de la traverse (33).

7. Balance selon la revendication 1, caractérisée en ce que la traverse (33) a une forme en étrier et l'extrémité de chacune de ses ailes est fixée par vissage sur le châssis (9) de la balance au moyen d'une vis (38) et en ce que la position de la base de la traverse (33) en étrier sur les supports (31) est réglable.

8. Balance selon la revendication 7, caractérisée en ce qu'un lieu de flexion (51) est réalisé au voisinage de chacune des vis (38).
